(19) **Europäisches Patentamt / European Patent Office / Office européen des brevets**

(11) **EP 2 246 146 B1**

(12) **EUROPEAN PATENT SPECIFICATION**

(45) Date of publication and mention of the grant of the patent:
**09.11.2016 Bulletin 2016/45**

(51) Int Cl.:
**B23K 26/40** *(2014.01)*  **B23K 26/06** *(2006.01)*

(21) Application number: **10161268.7**

(22) Date of filing: **28.04.2010**

(54) **Laser machining method**

Laserbearbeitungsverfahren

Procédé d'usinage laser

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.04.2009 JP 2009110316**
**16.04.2010 JP 2010094721**

(43) Date of publication of application:
**03.11.2010 Bulletin 2010/44**

(73) Proprietor: **Mitsuboshi Diamond Industrial Co., Ltd.**
**Suita-city,**
**Osaka 564-0044 (JP)**

(72) Inventors:
• **Fukuhara, Kenji**
**Suita City Osaka 564-0044 (JP)**
• **Shimizu, Seiji**
**Suita City Osaka 564-0044 (JP)**
• **Yamamoto, Kouji**
**Suita City Osaka 564-0044 (JP)**

(74) Representative: **TBK**
**Bavariaring 4-6**
**80336 München (DE)**

(56) References cited:
**EP-A1- 1 498 216     US-A1- 2004 029 362**
**US-A1- 2005 274 702**

**Description**

BACKGROUND

Field of the Invention

The present invention relates to a laser machining method. More particularly, the present invention relates to a laser machining method for directing a laser light along a scribe-scheduled line on a surface of a glass substrate and forming a scribe groove.

Background Information

A machining method using laser light has been proposed as one method for segmenting a glass substrate, a semiconductor substrate, a ceramic substrate, or another brittle material substrate. In this method, first, a scribe groove is formed by directing a laser light along a scribe-scheduled line on the surface of a brittle material substrate while moving the laser light. Pressure is then applied by a breaking apparatus or the like to both sides of the scribe groove on the brittle material substrate, whereby the substrate is segmented along the scribe groove (see Japanese Laid-open Patent Application Nos. 2005-271563 and 2005-314127).

In cases in which a scribe groove is formed by laser light on the surface of a brittle material substrate, such as has been described above, the laser light being used is focused by a condensing lens, and the focal position is set in the vicinity of the top surface of the brittle material substrate. This causes abrasions as a result of light energy absorption at the laser light focal position, and the brittle material in proximity to the focal position can be vaporized to the exterior. A scribe groove can be formed along the scribe-scheduled line by performing abrasion machining while moving the focal position.

In the conventional method for forming a scribe groove by using abrasion machining disclosed in Japanese Laid-open Patent Application No. 2005-271563, there is a risk that cracking will be caused by impact pressure or miniature cracks will form due to melting and rapid cooling in the sections where abrasion occurs. Therefore, the strength of an end surface of segmented substrate (hereinafter referred to as "end surface strength") may be reduced.

According to the method for forming a scribe groove using abrasion machining as disclosed in Japanese Laid-open Patent Application No. 2005-314127, the thermal diffusion of the directed pulse laser light through glass is reduced to minimize melting, whereby the occurrence of unevenness and other surface defects, cracking, or other adverse events can be minimized. However, in cases in which a scribe groove is formed on an extremely thin glass substrate (e.g., 0.5 mm or less in thickness) such as a display panel, sufficient end surface strength cannot be obtained even when the method disclosed in Japanese Laid-open Patent Application No. 2005-314127 is used.

In view of the above, it will be apparent to those skilled in the art from this disclosure that there exists a need for an improved laser machining method and a laser machining apparatus. This invention addresses this need in the art as well as other needs, which will become apparent to those skilled in the art from this disclosure.

Relevant prior art is disclosed in US 2004/0029362, EP1498216, and US 2005/0274702.

SUMMARY

An object is to ensure that defects, cracks, and other adverse events do not readily occur in the machined sections, and a high end surface strength can be preserved after machining, even in cases in which abrasion machining is performed by pulse laser light on a glass substrate or another brittle material substrate.

A laser machining method according to a first aspect is a method according to claim 1.

In this type of laser machining method, while abrasion machining is being performed by a laser, the brittle material substrate irradiated with laser light is simultaneously affected by the heat and the machined section is melted. With this type of machining method, defects and cracking in the machined end surface of the brittle material substrate are minimized, and a high end surface strength can be preserved.

A laser machining method according to a second aspect is the method according to the first aspect, wherein the value obtained by multiplying the amount of heat input ($J/cm^2$) by the linear expansion coefficient ($10^{-7}/K$) of the brittle material is more preferably in a range of 3600 or greater and 88000 or less.

A laser machining method according to a third aspect is the method according to the first aspect, wherein the number of pulses within the square is preferably five pulses or greater in cases in which the value obtained by multiplying the amount of heat input ($J/cm^2$) by the linear expansion coefficient ($10^{-7}/K$) of the brittle material is in a range of 3800 or greater and 76000 or less.

In cases in which the linear expansion coefficient is comparatively small, the amount of heat input must be increased in order to melt the machined section. In view of this, the number of pulses within a square circumscribing the condensed light diameter is preferably five or more in order to increase the percentage of overlap of the pulse laser light.

A laser machining method according to a fourth aspect is the method according to the first aspect, wherein the pulse width of the pulse laser light is 1 ns or greater and 1000 ns or less.

In this case, the machined section irradiated by pulse laser light is readily susceptible to heat. Therefore, it is possible to melt the machined end surface without increasing the laser intensity of the pulse laser light.

A laser machining method according to a fifth aspect is the method according to the first aspect, wherein the pulse laser light is ultraviolet laser light having a wavelength of 300 nm or less.

In this case, the pulse laser light can be efficiently absorbed because the excitation of electrons in the brittle material substrate is initiated by the energy of a single photon. Therefore, it is possible to melt the machined end surface without increasing the laser intensity of the pulse laser light.

A laser machining apparatus (not claimed) is an apparatus for directing laser light along a scribe-scheduled line on a surface of a brittle material substrate and forming a scribe groove, the apparatus having a laser irradiation mechanism and a movement mechanism. The laser irradiation mechanism has a laser oscillator for transmitting pulse laser light, and a light-condensing optical mechanism for condensing and directing the transmitted pulse laser light. The movement mechanism moves the laser irradiation mechanism along the surface of the scribe-scheduled line on the brittle material substrate in a relative fashion. In this apparatus, the laser intensity of the pulse laser light is $1.0 \times 10^8$ W/cm$^2$ or greater and $1.0 \times 10^{10}$ W/cm$^2$ or less. The value obtained by multiplying the amount of heat input (J/cm$^2$) by the linear expansion coefficient ($10^{-7}$/K) of the brittle material is in a range of 3000 or greater and 100000 or less. Furthermore, the number of pulses within a square circumscribing the condensed light diameter of the pulse laser light is two or greater.

By using this type of laser machining apparatus to form a scribe groove, defects and cracks can be minimized in the machined end surface of the brittle material substrate, and a high end surface strength can be preserved.

With this method and apparatus as described above, defects, cracks, and other adverse events do not readily arise in the machined sections. Further, a high post-machining end-surface strength can be preserved, even in cases in which abrasion machining is performed by pulse laser light on a glass substrate or another brittle material substrate.

These and other objects, features, aspects, and advantages of the present invention will become apparent to those skilled in the art from the following detailed description, which, taken in conjunction with the annexed drawings, discloses exemplary embodiments of the present invention.

BRIEF DESCRIPTION OF THE DRAWINGS

Referring now to the attached drawings which form a part of this original disclosure:

FIG. 1 is a schematic drawing showing the configuration of a laser machining apparatus according to an exemplary embodiment;
FIGS. 2A-2E are drawings showing an example of abrasion machining using pulse laser light;
FIGS. 3A and 3B are views of a scribe groove in which defects or cracks have been formed by abrasion machining, as observed from the surface of a brittle material substrate;
FIG. 4 is a schematic drawing showing the focal position of the laser machining apparatus;
FIG. 5 is a view of a diagram for describing the "number of pulses within a square;"
FIG. 6 is a view of a scribe groove observed from the surface of a brittle material substrate, in the case of a glass substrate being machined by the laser machining method according to the exemplary embodiment; and
FIG. 7 is a view of a graph comparing end surface strength between a case in which a scribe groove has been formed by a conventional machining method, and a case in which a scribe groove has been formed by the laser machining method according to the exemplary embodiment.

DETAILED DESCRIPTION OF THE EXEMPLARY EMBODIMENTS

Selected embodiments will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

Laser Machining Apparatus

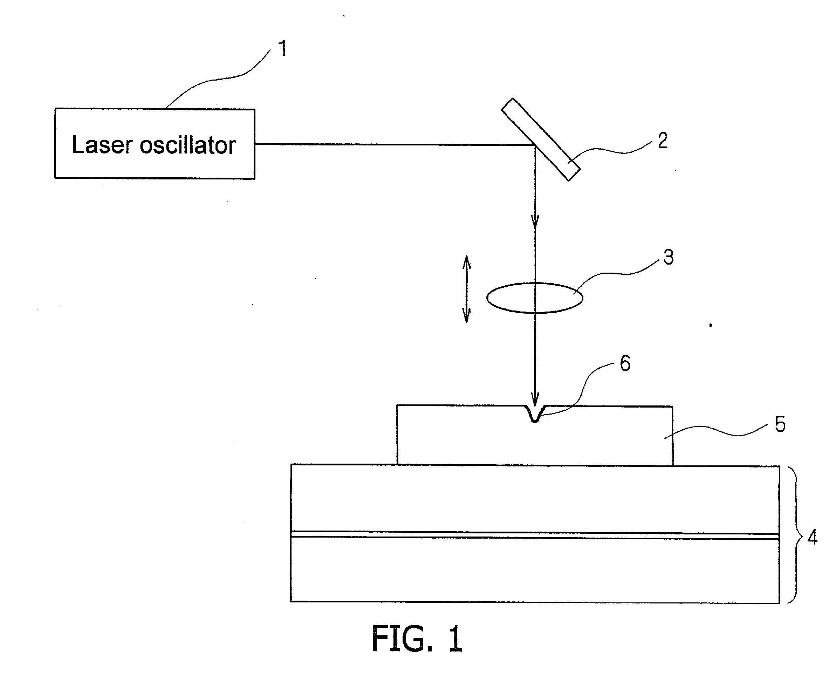

A laser machining apparatus according to an exemplary embodiment is shown in FIG. 1. This laser machining apparatus has a laser oscillator 1, a mirror mechanism 2, a lens mechanism 3, and an XY stage 4. A laser irradiation mechanism is configured from the laser oscillator 1, the mirror mechanism 2, and the lens mechanism 3. Further, a movement mechanism is configured using the XY stage.

The laser oscillator 1 oscillates pulse laser light. The laser oscillator 1 is not particularly limited as long as it is a YAG laser, an IR laser, or another suitable pulse laser light oscillator. A suitable laser having a wavelength capable of abrasion machining is preferably selected according to the material of the brittle material substrate 5 being machined. The pulse width of the pulse laser light is preferably in a range of 1 ps or greater and 1000 ns or less, and is more preferably in a range of 1 ns or greater and 1000 ns or less, so that laser abrasion machining can be performed and the brittle material substrate 5 can be affected by the heat.

The mirror mechanism 2 and the lens mechanism 3 together form a light-condensing optical mechanism, and the direction in which pulse laser light propagates is varied so that the brittle material substrate 5 can be irradiated with the pulse laser light from a substantially vertical direction. One or a plurality of mirrored surfaces may be used as the mirror mechanism 2. Alternatively, a prism, a diffractive grating, or the like may be used.

The lens mechanism 3 condenses the pulse laser light. More specifically, the lens mechanism 3 adjusts the vertical position of the focal position in accordance with the thickness of the brittle material substrate 5, the focal position being where the pulse laser light is condensed. The focal position may be adjusted by replacing the lens of the lens mechanism 3, or by varying the vertical position of the lens mechanism 3 using an actuator (not shown).

The XY stage 4 is a table on which rests a glass substrate or another brittle material substrate 5 that is to be segmented, and is capable of moving in an X direction and a Y direction, which are orthogonal to each other. The relative positions of the pulse laser light and the brittle material substrate 5 resting on the XY stage 4 can be varied by moving the XY stage 4 at a predetermined speed in the X direction and Y direction. Usually, the XY stage 4 is moved and the pulse laser light is moved along a scheduled line of a scribe groove 6 formed in the surface of the brittle material substrate 5. The movement speed of the XY stage 4 during machining is controlled by a controller (not shown), whereby the pulse laser light is directed onto the brittle material substrate 5 at a predetermined overlap percentage.

Example of Abrasion Machining

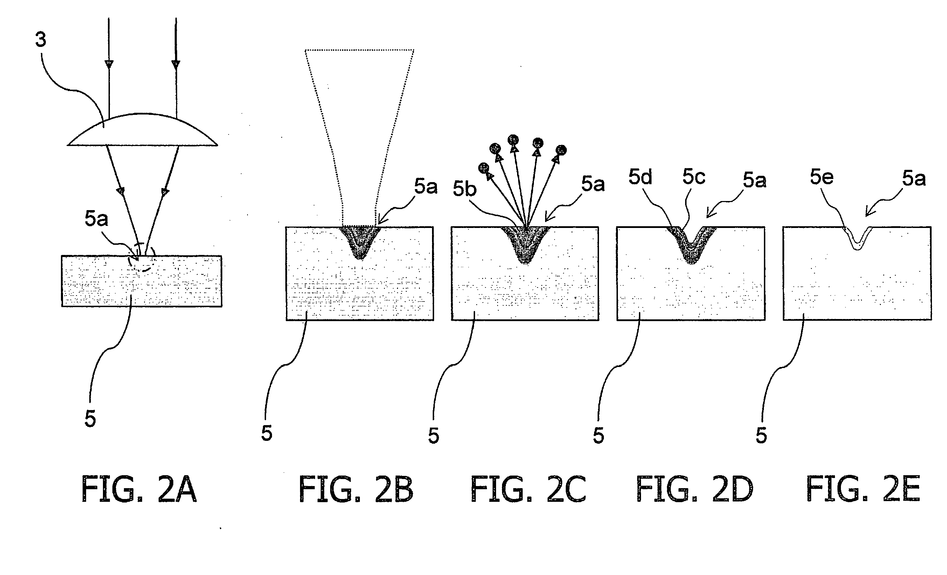

FIGS. 2A-2E show an example of abrasion machining using pulse laser light. The pulse laser light emitted from the laser oscillator 1 is condensed in the vicinity 5a of the top surface of the brittle material substrate 5 by the lens mechanism 3, as shown in FIG. 2A. In cases in which the pulse laser light is absorbed, the focal position vicinity 5a of the brittle material substrate 5 is heated, as shown in FIG. 2B.

In cases in which the temperature of the focal position vicinity 5a of the brittle material substrate 5 exceeds the boiling point of the brittle material substrate 5, portions of the section 5b exceeding the boiling point are vaporized, as shown in FIG. 2C. There are sections 5c and 5d located somewhat apart from the focal position that do not reach the boiling point of the brittle material substrate 5 but do exceed the melting point. The surface 5c melts in these sections 5c and 5d as shown in FIG. 2D, and when the temperature thereafter decreases due to heat radiation, the surface solidifies, thereby forming a melt mark 5e, as shown in FIG. 2E.

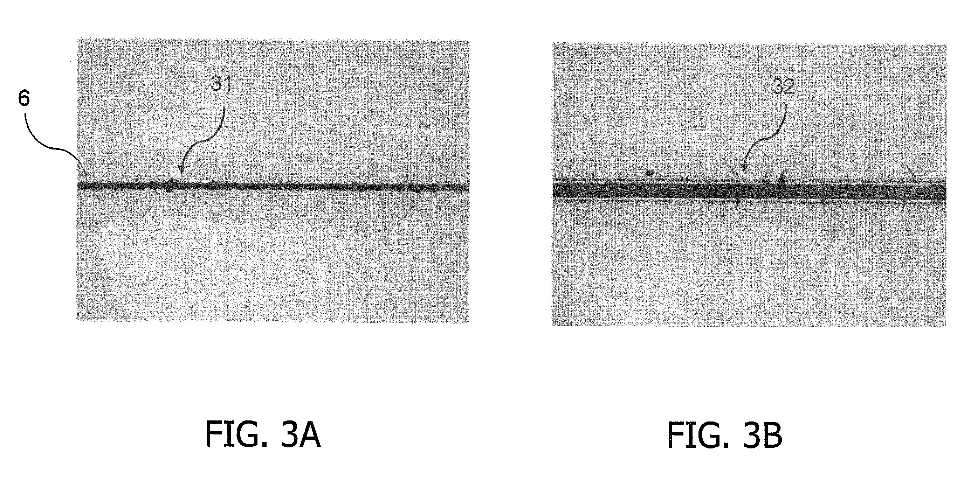

FIGS. 3A and 3B show a scribe groove 6 in which defects or cracks have been formed by abrasion machining, as observed from the surface of the brittle material substrate 5. In cases in which abrasion machining is performed using the pulse laser light under conditions in which an melt mark is not formed in the scribe groove 6, i.e., in which the effects of heat are minimized, defects 31 appear along the formed scribe groove 6 as shown in FIG. 3A.

In cases in which melting is excessive, cracks 32 form from the scribe groove 6 as shown in FIG. 3B.

Controlling the Condensed Light Diameter

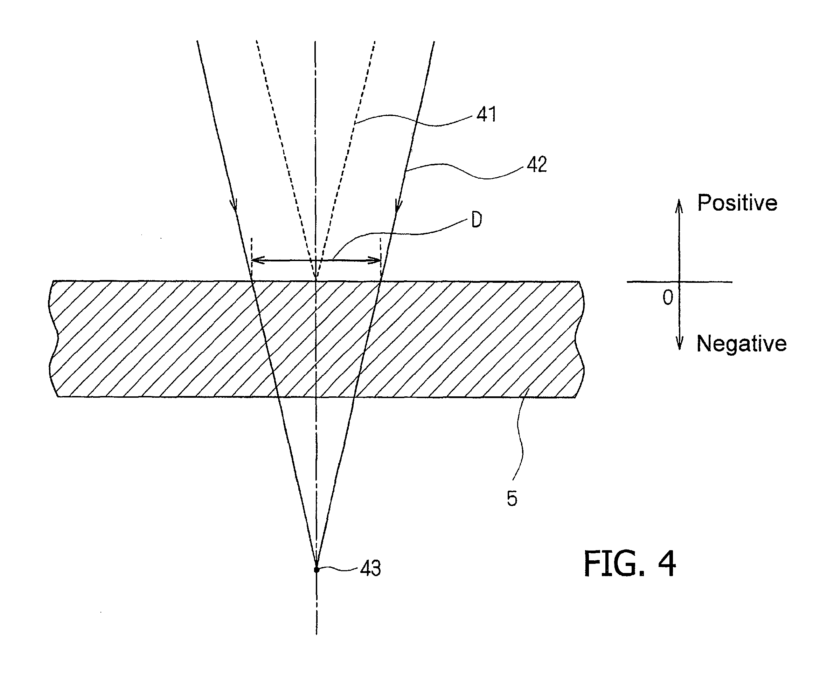

In the present embodiment, the focal position of the pulse laser light is not in the vicinity of the top surface of the substrate as in conventional practice, but instead is moved downward so that the beam diameter (condensed light diameter) of the pulse laser light in the top surface of the substrate is a predetermined value. FIG. 4 is a schematic drawing showing the focal position of the laser machining apparatus

With a conventional laser machining apparatus, pulse laser light 41 is condensed so that its focal position is in the top surface vicinity of the brittle material substrate 5, as shown in FIG. 4. In the present embodiment, however, the focal position 43 is moved downward in comparison with the conventional apparatus, and the beam diameter D of the pulse laser light 42 on the top surface of the brittle material substrate 5 is adjusted so as to reach a predetermined value. Instead of the method described above, the focal position of the pulse laser light may be moved to be above the substrate top surface, and the beam diameter D of the pulse laser light 42 on the top surface of the brittle material substrate 5 may be adjusted so as to reach a predetermined value.

Laser Machining Method

In cases where a scribe groove 6 is formed in the brittle material substrate 5, first, pulse laser light is directed onto the surface of the brittle material substrate 5 (laser light irradiation step). The pulse laser light is then scanned along

**EP 2 246 146 B1**

a scribe-scheduled line (laser light scanning step). The scribe groove 6 is thereby formed along the scribe-scheduled line.

A characteristic of the present embodiment is that abrasion machining using pulse laser light is performed on the brittle material substrate, while at the same time, the brittle material substrate is affected by heat and the machined section is melted (this type of machining is hereinafter referred to as "melt abrasion"). With this type of melt abrasion, the end surface strength can be better preserved than with conventional abrasion machining.

Presented below are conditions under which melt abrasion can occur.

The conditions of the laser or the like used in the examples are as follows. The pulse width of the laser light in the following example is in a range of 17.5 to 22.0 ps. The pulse width is determined depending on the laser oscillator used, repeating frequency, and output. Specifically, when the repeating frequency and output are varied with the same laser oscillator, the pulse width changes. The pulse width is in a range of 17.5 to 22.0 ps in the following example, but as previously described, the pulse width is preferably in a range of 1 ps or greater and 1000 ns or less, and more preferably a range of 1 ns or greater and 1000 ns or less, in order for the brittle material substrate 5 to undergo the heat effects.

Laser: DPSSL (semiconductor-laser-excited solid-state laser), maximum output 7W
Wavelength: 266 nm
Substrate 1: 0A10 (product name: made by Nippon Electric Glass Co., Ltd.)

Thickness: 0.3 mm
Linear expansion coefficient: 38 ($10^{-7}$/K)

Substrate 2: D263 (product name: made by Schott AG)

Thickness: 0.3 mm
Linear expansion coefficient: 73 ($10^{-7}$/K)

Scanning Speed

Example 1

With substrate 1, melt abrasion could be achieved under the following conditions as a result of adjusting the condensed light diameter on the substrate top surface to 8.47 $\mu$m and performing a single scan,.

(i) A repeating frequency of 60 kHz and a scan speed of 20 mm/s to 80 mm/s
(ii) A repeating frequency of 90 kHz and a scan speed of 20 mm/s to 150 mm/s

Example 2

With substrate 1, melt abrasion could be achieved under the following conditions as a result of adjusting the condensed light diameter on the substrate top surface to 21.72 $\mu$m and performing a single scan.

(i) A repeating frequency of 60 kHz and a scan speed of 20 mm/s to 80 mm/s
(ii) A repeating frequency of 90 kHz and a scan speed of 20 mm/s to 70 mm/s

Example 3

With substrate 2, melt abrasion could be achieved under the following conditions as a result of adjusting the condensed light diameter on the substrate top surface to 8.47 $\mu$m and performing a single scan.

(i) A repeating frequency of 60 kHz and a scan speed of 80 mm/s to 160 mm/s
(ii) A repeating frequency of 90 kHz and a scan speed of 60 mm/s to 260 mm/s

Example 4

With substrate 2, melt abrasion could be achieved under the following conditions as a result of adjusting the condensed light diameter on the substrate top surface to 21.72 $\mu$m and performing a single scan.

5

(i) At a repeating frequency of 60 kHz, melt abrasion was only achieved in an extremely limited range.

(ii) A repeating frequency of 90 kHz and a scan speed of 50 mm/s to 80 mm/s Laser Intensity

Example 5

With substrate 1, the laser intensity at which melt abrasion was made possible was $1.50 \times 10^8$ to $8.88 \times 10^9$ (W/cm$^2$) at repeating frequencies of 60 kHz and 90 kHz.

Example 6

With substrate 2, the laser intensity at which melt abrasion was made possible was $1.50 \times 10^8$ to $8.88 \times 10^9$ (W/cm$^2$) at repeating frequencies of 60 kHz and 90 kHz,. Amount of Heat Input

Example 7

With substrate 1, melt abrasion was achievable with an amount of heat input in a range of 184.1 to 1770.3 (J/cm$^2$) as a result of using a repeating frequency of 60 kHz and at condensed light diameters of 8.47 $\mu$m and 21.72 $\mu$m.

Example 8

With substrate 1, melt abrasion was achievable with an amount of heat input in a range of 115.1 to 1180.2 (J/cm$^2$) as a result of using a repeating frequency of 90 kHz and at condensed light diameters of 8.47 $\mu$m and 21.72 $\mu$m.

Example 9

With substrate 2, melt abrasion was achievable with an amount of heat input in a range of 460.4 to 1180.2 (J/cm$^2$) as a result of using a repeating frequency of 60 kHz and at condensed light diameters of 8.47 $\mu$m and 21.72 $\mu$m.

Example 10

With substrate 2, melt abrasion was achievable with an amount of heat input in a range of 57.5 to 393.4 (J/cm$^2$) as a result of using a repeating frequency of 90 kHz and at condensed light diameters of 8.47 $\mu$m and 21.72 $\mu$m.

Definitions

The terms "laser intensity" and "amount of heat input" are defined by the following equations (1) and (2) in the present specification.

Equation 1

$$\text{Laser intensity (W/cm}^2) = \text{pulse energy (J)}/(\text{pulse width (s)} \times \text{beam area (cm}^2))$$

Equation 2

$$\text{Amount of heat input (J/cm}^2) = \text{Pulse energy (J)} \times (\text{number of pulses within square}$$

$$\text{area (cm}^2) \text{ of square circumscribing condensed light diameter)}$$

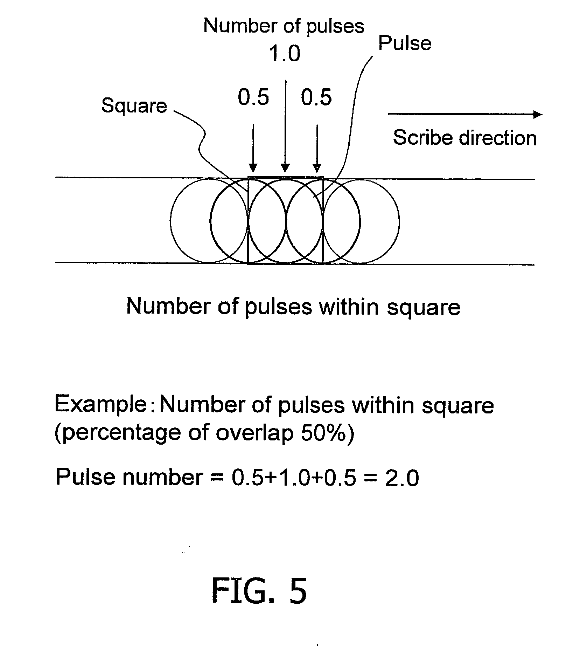

The term "number of pulses within square" is defined by the following Equation 3 (see FIG. 5).

Equation 3

$$\text{Number of pulses within square} = \text{condensed light diameter (mm)/pulse intervals (mm)} = \text{condensed light diameter (mm)/(scan speed (mm/s)/repeating frequency (Hz))}$$

The results of the above examples show that the conditions at which melt abrasion was possible are as follows.

Laser intensity: $1.0 \times 10^8$ to $1.0 \times 10^{10}$ (W/cm$^2$) (Substrates 1 and 2)

Amount of heat input:

Substrate 1: 100 ($\approx$ 115.1) to 2000 ($\approx$ 1770.3) (J/cm$^2$)
Substrate 2: 50 ($\approx$ 57.5) to 1200 ($\approx$ 1180.2) (J/cm$^2$)

Number of pulses within square:

Substrate 1: 5.0 pulses or more
Substrate 2: 2.0 pulses or more

It should be apparent from this disclosure that glass having a large linear expansion coefficient melts at a low input heat. It should also be apparent from this disclosure that since the linear expansion coefficient of substrate 2 (73(10$^{-7}$/K)) is about twice the linear expansion coefficient of substrate 1 (38(10$^{-7}$/K)), the amount of heat input and number of pulses at which melt abrasion is possible are about half of those of substrate 1.
When the value "amount of heat input (J/cm$^2$) $\times$ linear expansion coefficient (10$^{-7}$/K)" is found for each substrate, the values are as follows.

Substrate 1: 3800 to 76000
Substrate 2: 3650 to 87600

The conditions at which melt abrasion is made possible are generalized as follows from the above description.

(a) Laser intensity: $1.0 \times 10^8$ to $1.0 \times 10^{10}$ (W/cm$^2$)
(b) (Amount of heat input (J/cm$^2$) $\times$ linear expansion coefficient (10$^{-7}$/K): $\geq$3000 and $\leq$100000
(c) Number of pulses within square: $\geq$2 pulses (with large linear expansion coefficient)

$\geq$5 pulses (with small linear expansion coefficient)

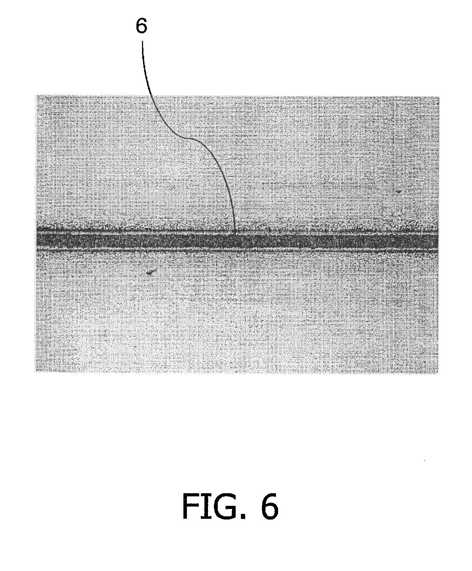

The state of a scribe groove obtained by melt abrasion is shown in FIG. 6. As shown, a scribe groove 6 can be formed with high precision using melt abrasion machining, without the occurrence of defects or cracking.

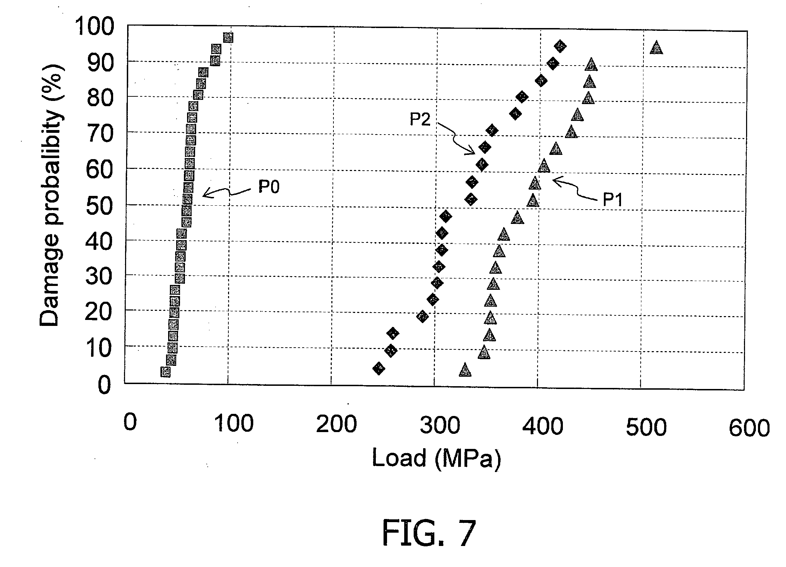

FIG. 7 is a view of a graph comparing end surface strength between a case in which the end surface has been melted by melt abrasion and a case in which the end surface has not been melted. In this graph, the data set P0 (■) was obtained by forming a scribe groove by conventional abrasion, in which the end surface does not melt; applying loads to the substrate; and plotting the probability of the end surface being damaged for each load. The data set P1 (▲) is found when a scribe groove was formed by melt abrasion in the substrate 1, and the data set P2 (♦) is found when a scribe groove was formed by melt abrasion in the substrate 2, both sets of data being damage probabilities similar to the data set P0.
As is clear from this graph, in cases in which a scribe groove is formed by conventional abrasion, the end surface is damaged before the load reaches 100 MPa. In cases in which a scribe groove is formed by melt abrasion, the end surface is damaged at loads from 250 to 425 MPa, and it is clear that the end surface strength is much higher than when a conventional machining method is employed.
As described above, according to the machining method of the present embodiment, a scribe groove is formed by melt abrasion while adjusting the laser intensity of the pulse laser light and the amount of heat input. Therefore, defects and cracks in the end surface of the substrate can be minimized, and a high end surface strength can be preserved.

Other Embodiments

The present invention is not limited to embodiments such as the ones described above; various modifications can be made without deviating from the scope of the present invention, as defined by the appended claims.

The substrate being machined is not limited to the substrates 1 and 2 described above. The present invention is applied to a variety of glass substrates.

GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers, and/or steps. The foregoing also applies to words having similar meanings such as the terms, "including," "having," and their derivatives. Also, the terms "part," "section," "portion," "member," or "element" when used in the singular can have the dual meaning of a single part or a plurality of parts. As used herein to describe the present invention, the following directional terms "forward, rearward, above, downward, vertical, horizontal, below, and transverse" as well as any other similar directional terms refer to those directions of a laser machining apparatus. Accordingly, these terms, as utilized to describe the present invention should be interpreted relative to a laser machining apparatus as normally used. Finally, terms of degree such as "substantially," "about," and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

A laser machining method includes directing pulse laser light onto a surface of a brittle material substrate, and a laser light scanning step for scanning laser light along a scribe-scheduled line. The laser intensity of the pulse laser light is $1.0 \times 10^8$ W/cm$^2$ or greater and $1.0 \times 10^{10}$ W/cm$^2$ or less. The value obtained by multiplying the amount of heat input (J/cm$^2$) by the linear expansion coefficient ($10^{-7}$/K) of the brittle material is in a range of 3000 or greater and 100000 or less. Furthermore, the number of pulses within a square circumscribing the condensed light diameter of the pulse laser light is two or greater.

**Claims**

1. A method for segmenting a glass substrate (5) comprising scanning pulse laser light along a scribe-scheduled line, **characterized by**
   directing the laser light along the scribe-scheduled line on a surface of the glass substrate (5), and
   forming a scribe groove (6) by melt abrasion, wherein the melt abrasion comprises simultaneously melting and abrasion;
   the laser intensity of the pulse laser light is $1.0 \times 10^8$ W/cm$^2$ or greater and $1.0 \times 10^{10}$ W/cm$^2$ or less,
   the value obtained by multiplying the amount of heat input measured in J/cm$^2$ by the linear expansion coefficient measured in $10^{-7}$/K of the glass substrate is in a range of 3000 or greater and 100000 or less, and
   the number of pulses within a square circumscribing the condensed light diameter of the pulse laser light is two or greater.

2. The laser machining method as recited in claim 1, wherein
   the value obtained by multiplying the amount of heat input measured in J/cm$^2$ by the linear expansion coefficient measured in $10^{-7}$/K of the brittle material is in a range of 3600 or greater and 88000 or less.

3. The laser machining method as recited in claim 1, wherein
   the number of pulses within the square is five or more in cases in which the value obtained by multiplying the amount of heat input measured in J/cm$^2$ by the linear expansion coefficient measured in $10^{-7}$/K of the brittle material is in a range of 3800 or greater and 76000 or less.

**4.** The laser machining method as recited in claim 1, wherein the pulse width of the pulse laser light is 1 ns or greater and 1000 ns or less.

**5.** The laser machining method as recited in claim 1, wherein the pulse laser light is ultraviolet laser light having a wavelength of 300 nm or less.

**Patentansprüche**

**1.** Verfahren zum Segmentieren eines Glassubstrats (5) mit:

einem Abtasten entlang einer zum Ritzen vorgesehenen Linie mit gepulstem Laserlicht,
**gekennzeichnet durch**
ein Richten des Laserlichts entlang der zum Ritzen vorgesehenen Linie auf einer Oberfläche des Glassubstrats (5) und
ein Bilden einer Ritzrille (6) **durch** Schmelzabtragung, wobei die Schmelzabtragung gleichzeitig Schmelzen und Abtragen aufweist;
die Laserintensität des gepulsten Laserlichts $1,0 \times 10^8$ W/cm$^2$ oder größer und $1,0 \times 10^{10}$ W/cm$^2$ oder kleiner ist, der Wert, der **durch** Multiplizieren der eingegebenen Wärmemenge, die in J/cm$^2$ gemessen wird, mit dem linearen Ausdehnungskoeffizienten des Glassubstrats, der in $10^{-7}$/K gemessen wird, in einem Bereich von 3000 oder größer und 100000 oder kleiner ist, und
die Anzahl der Pulse innerhalb eines Quadrats, dass den kondensierten Lichtdurchmesser des gepulsten Laserlichts umschreibt, zwei oder größer ist.

**2.** Das Laserbearbeitungsverfahren nach Anspruch 1, wobei

der Wert, der durch Multiplizieren der eingegebenen Wärmemenge, die in J/cm$^2$ gemessen wird, mit dem linearen Ausdehnungskoeffizienten, des brüchigen Materials, der in $10^{-7}$/K gemessen wird, erhalten wird, in einem Bereich von 3600 oder größer und 88000 oder kleiner ist.

**3.** Laserbearbeitungsverfahren nach Anspruch 1, wobei

die Anzahl der Pulse innerhalb des Quadrats fünf oder größer in Fällen ist, in denen der Wert, der durch Multiplizieren der eingegebenen Wärmemenge, die in J/cm$^2$ gemessen wird, mit dem linearen Ausdehnungskoeffizienten des brüchigen Materials, der in $10^{-7}$/K gemessen wird, erhalten wird, in einem Bereich von 3800 oder größer und 76000 oder kleiner ist.

**4.** Laserbearbeitungsverfahren nach Anspruch 1, wobei

die Pulsbreite des gepulsten Laserlichts 1 ns oder größer und 1000 ns oder kleiner ist.

**5.** Laserbearbeitungsverfahren nach Anspruch 1, wobei

das gepulste Laserlicht ein ultraviolettes Laserlicht mit einer Wellenlänge von 300 nm oder weniger ist.

**Revendications**

**1.** Procédé pour segmenter un substrat en verre (5) comprenant :

le balayage d'une lumière laser impulsionnelle le long d'une ligne de découpe programmée,
**caractérisé par**
l'application de la lumière laser le long de la ligne de découpe programmée sur une surface du substrat en verre (5), et
la formation d'une rainure de découpe (6) par abrasion-fusion, dans lequel l'abrasion-fusion comprend une fusion et une abrasion simultanées ;
l'intensité laser de la lumière laser impulsionnelle est de $1,0 \times 10^8$ W/cm$^2$ ou plus et de $1,0 \times 10^{10}$ W/cm$^2$ ou moins,

la valeur obtenue en multipliant la quantité d'entrée de chaleur mesurée en J/cm$^2$ par le coefficient de dilatation linéaire mesuré en 10$^{-7}$/K du substrat en verre est dans une plage de 3.000 ou plus et 100.000 ou moins, et le nombre d'impulsions dans un carré circonscrivant le diamètre de lumière condensée de la lumière laser impulsionnelle est de deux ou plus.

2. Procédé d'usinage au laser selon la revendication 1, dans lequel
la valeur obtenue en multipliant la quantité d'entrée de chaleur mesurée en J/cm$^2$ par le coefficient de dilatation linéaire mesuré en 10$^{-7}$/K du matériau fragile est dans une plage de 3.600 ou plus et de 88.000 ou moins.

3. Procédé d'usinage au laser selon la revendication 1, dans lequel
le nombre d'impulsions dans le carré est de cinq ou plus dans les cas dans lesquels la valeur obtenue en multipliant la quantité d'entrée de chaleur mesurée en J/cm$^2$ par le coefficient de dilatation linéaire mesuré en 10$^{-7}$/K du matériau fragile est dans une plage de 3.800 ou plus et de 76.000 ou moins.

4. Procédé d'usinage au laser selon la revendication 1, dans lequel
la durée d'impulsion de la lumière laser impulsionnelle est de 1 ns ou plus et de 1.000 ns ou moins.

5. Procédé d'usinage au laser selon la revendication 1, dans lequel
la lumière laser impulsionnelle est une lumière laser ultraviolette d'une longueur d'onde de 300 nm ou moins.

**FIG. 1**

Laser oscillator

FIG. 2A   FIG. 2B   FIG. 2C   FIG. 2D   FIG. 2E

EP 2 246 146 B1

FIG. 3A

FIG. 3B

FIG. 4

Number of pulses
1.0

Pulse

0.5 | 0.5

Square

Scribe direction

Number of pulses within square

Example: Number of pulses within square
(percentage of overlap 50%)

Pulse number = 0.5+1.0+0.5 = 2.0

FIG. 5

FIG. 6

FIG. 7

**EP 2 246 146 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005271563 A
- JP 2005314127 A
- US 20040029362 A
- EP 1498216 A
- US 20050274702 A

**18**